# EUROPEAN PATENT SPECIFICATION

(11) **EP 0 626 526 B1**
(45) Date of publication and mention of the grant of the patent: **22.01.1997**
(21) Application number: 94201252.7
(22) Date of filing: 04.05.1994
(51) Int. Cl.: F16G 5/16

(54) **Drive belt**
Treibriemen
Courroie de transmission

(30) Priority: 24.05.1993 NL 9300880
(43) Date of publication of application: 30.11.1994
(73) Proprietor: Van Doorne's Transmissie B.V., NL-5000 AM Tilburg (NL)
(72) Inventor: Smeets, Paulus Maria, NL-5046 TC Tilburg (NL)
(74) Representative: de Bruijn, Leendert C.

(56) References cited:
- EP-A- 0 151 396
- EP-A- 0 366 169
- US-A- 4 610 648
- US-A- 4 854 919
- US-A- 5 004 450
- PATENT ABSTRACTS OF JAPAN vol. 16, no. 302 (M-1275) (5345) 3 July 1992 & JP-A-04 083 941 (NISSAN MOTOR) 17 March 1992

## Description

The invention relates to a drive belt, in particular suitable for use in a continuously variable transmission, as defined by the features of the preamble of claim 1 known from EP-A 366 169.

A further drive belt is known from US Patent Specification 5004450, and is used in particular in continuously variable transmissions. The drive belt in that case is placed around two pulleys. The pulleys each comprise two sheaves, the distance between which is adjustable. Varying the distance between the sheaves of the two pulleys will move the drive belt to different radial positions on the pulleys, with the result that the transmission ratio is adjustable.

It is also known from US Patent Specification 4854919 that the geometrical design of the pulley/drive belt combination often causes the drive belt to run out of true between the two pulleys, so that it also runs slightly out of true into the pulleys. The transverse elements of the drive belt are consequently received in the pulley slightly tilted in a plane at right angles to the carriers. This phenomenon is recognized in US Patent Specification 5004450, and is overcome there by designing the contact faces of the transverse elements in such a way that the tilted transverse elements automatically correct their position in the pulleys and straighten up. This works well per se, but the transverse elements, on account of their configuration and narrow tolerances, are difficult to produce and are relatively expensive. Great forces also occur, with the result that overdimensioning of the transverse elements is necessary.

The object of the invention is to provide a drive belt in which the tilting of the transverse elements is largely overcome, and which is also relatively simple to produce, is guaranteed to wedge well in the pulleys, and need not be overdimensioned. For this purpose, the invention is characterized by the features of claim 1.

In the drive belt according to the invention, the transverse element, on the one hand, has sufficient play to position itself relative to the carriers and the pulleys, while, on the other hand, a tilting of the transverse elements is prevented in such a way that good wedging in the pulleys is ensured. The drive belt according to the invention is relatively simple and cheap to produce.

The invention can be used in particular for drive belts which use one or two carriers.

Particularly in the range in which the arc tangent is greater than 0.2° and smaller than 0.8°, the effectiveness is increased, and in particular an improved efficiency of the transmission is also obtained. The arc tangent is preferably approximately 0.5°.

According to a further development of the invention, one or more transverse elements are provided with projection/recess means, in which case a projection of one transverse element can be accommodated with some play in the recess of an adjacent transverse element. The play in this case is preferably essentially in the axial direction of the drive belt between projection and recess. This measure means that the transverse elements can position themselves in the optimum way not only relative to the pulley and the carriers, but also relative to the adjacent transverse elements.

The invention will be explained with reference to a drawing. In the drawing:
Fig. 1 shows a diagrammatic representation of a continuously variable transmission provided with a drive belt according to the invention;
Fig. 2 shows a top view of a drive belt running out of true into the pulley;
Fig. 3a shows a drive belt in cross-section, with a transverse element in the tilted position, for wedging in the pulley;
Fig. 3b shows a drive belt according to Fig. 3a during wedging in the pulley;
Fig. 4 shows a drive belt according to the invention in cross-section, with a transverse element in the straight position.

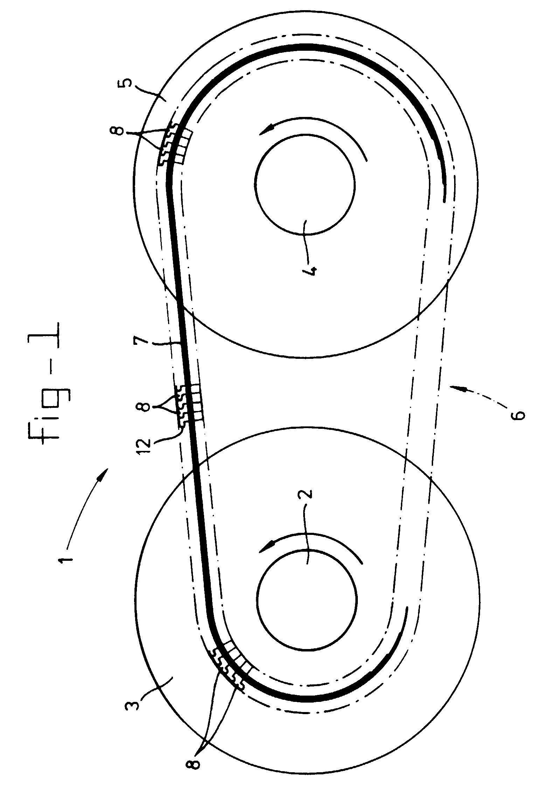

The continuously variable transmission 1 shown diagrammatically in Figure 1 comprises a pulley 3 disposed on a first shaft 2, a pulley 5 disposed on a second shaft 4, and a drive belt 6 positioned around the pulleys 3, 5. The drive belt 6 comprises one or more endless carriers 7, which carriers themselves can consist of one or more rings combined to the form of a carrier. Transverse elements 8 are disposed on the carriers 7, which elements generally slide over the carriers 7. It is assumed here that the way in which the continuously variable transmission 1 works is known.

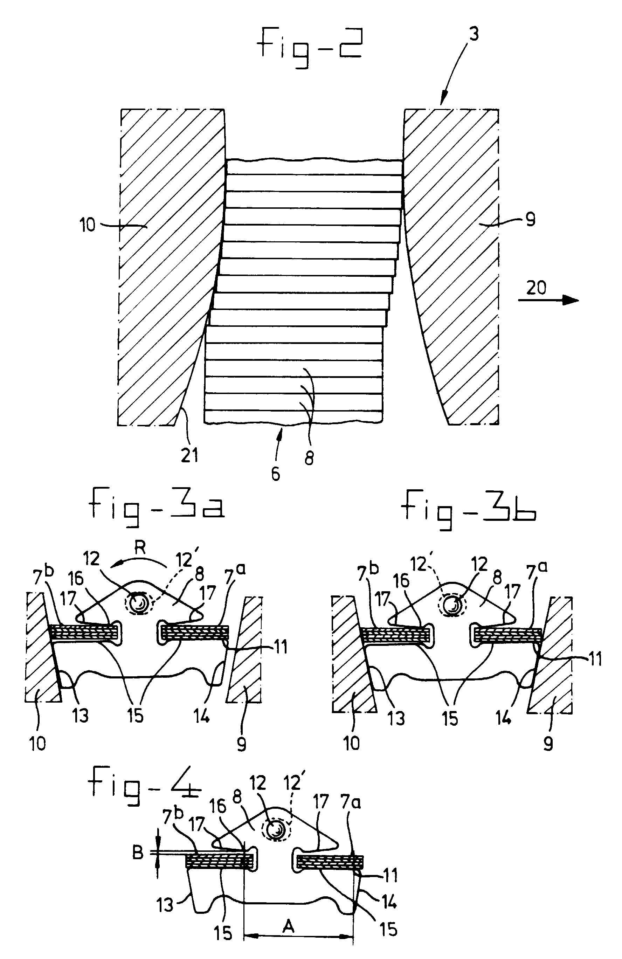

Figure 2 shows in top view the run-in of the drive belt into the pulley 3 with sheaves 9, 10. As explained in detail in US Patent Specification 4854919, the geometrical shape of the continuously variable transmission will often cause the drive belt 6 to run out of true into the pulley 3. The consequences of this running out of true can be largely overcome by the measures according to US Patent Specification 4854919. The running out of true does cause the transverse elements 8 of the drive belt 6 to come into contact first with the sheave 10, and there is no contact yet with sheave 9. As a result, the transverse element 8 will be given an impulse in the direction of the sheave 9 and will consequently move slightly in the direction of sheave 9 again and rotate in direction R (Figure 3a). Such a rotation and translation of the transverse element 8 is necessary for positioning between both the sheave 9 and the sheave 10. The transverse elements 8 are generally also provided with a projection 12 on one face and with a recess 12' on the opposite face, indicated here by a dotted line. The projection/recesses 12, 12' of adjacent transverse elements thereby engage with each other and guide this translation and rotation to some extent. For the rest, the projection/recess is not necessary for the embodiment of the invention.

Through the translation and in particular the rotation, the transverse element 8 will run out of true and will therefore also lie out of true between the sheaves 9, 10 of the pulley (Figure 3b). The translation and rotation are absolutely essential for taking the transverse elements between the pulleys when the drive belt runs out of true, but in particular from the point of view of slippage, wear and efficiency, it is undesirable for the transverse elements to be out of true in the pulley.

In US Patent Specification 5004450 the flanks 13, 14 of the transverse element 8 are shaped in such a way that the out-of-true position of the transverse element 8 is corrected automatically during wedging in the pulleys.

However, the invention aims largely to overcome this out-of-true position already before wedging in the pulleys, in which case the measures according to the US patent specification can also be applied.

As shown in Figure 3b, the transverse element 8 will rotate, but is slightly impeded therein by carrier 7a. The rotation of the transverse element will therefore be about the first contact point 11 of carrier 7a with bearing surface 15 of the transverse element 8. On the other hand, the rotation is limited by a second contact point 16 of carrier 7b with top surface 17 of the transverse element 8.

Figure 4 shows the drive belt 6 according to the invention in cross-section, with the transverse element 8 shown in the straight position. The first contact point 11 of the bearing surface 15 with carrier 7a in the case of tilting of the transverse element according to Figure 3 and the second contact point 16 of the top surface 17 with the carrier 7b in the case of tilting of the transverse element according to Figure 3 are also shown here.

The first and second contact points 11, 16 respectively lie in the axial direction of the drive belt 6 at a distance A. The carrier 7b and the second contact point 16 on the top surface 17 lie at a distance B. According to the invention, the drive belt must now be designed in such a way that the arc tangent of the quotient B/A is smaller than 1° and greater than 0°. In this way the transverse element, on the one hand, gains sufficient freedom to translate and to rotate in order to position itself between the pulleys, while, on the other hand, the tilting of the transverse elements is restricted already before the wedging in the pulleys, in such a way that sufficient wedging of the transverse elements between the pulleys is obtained, with improved efficiency of the transmission, reduced slippage and reduced wear. The drive belt is also relatively easy and cheap to manufacture.

In practice, it is found that in the range where the arc tangent lies between 0.2° and 0.8° in particular, the effectiveness is improved and the efficiency increased. The arc tangent is preferably about 0.5°.

As can be seen in Figure 2, it may be desirable for the transverse elements 8 on entering the pulley 3 to be capable of moving slightly relative to an adjacent transverse element in the axial direction 20 of the drive belt, in particular on contact with sheave 10. If transverse elements with projection/recess means 12, 12' are used, this movement can be impeded. For that reason, the projection 12 of a transverse element should preferably be accommodated with some play in the recess 12'. Since in the main a relative movement of the adjacent transverse elements in the axial direction 20 can be desirable or necessary, it is generally sufficient to have play in essentially the axial direction between projection 12 and recess 12'. This is shown in slightly exaggerated form in Figures 3a, 3b and 4, but it will be clear from Figure 2 that a play which permits a relative movement of adjacent transverse elements in the axial direction 20 corresponding to the projected tangent in the axial direction 20 of the run-in hyperbola 21 of sheave 10 at the position of the transverse element in question will suffice.

It will be clear that the invention is not limited to the embodiments shown. For example, the invention can be applied in a corresponding way to drive belts where one carrier or more than two carriers are being used. The bearing surface and/or the top surface can also be profiled, e.g. convex, concave or slanting, possibly with an eccentric position of the top of the profiled surface. This profiling can be provided either in the lengthwise direction or in the transverse direction. The projection/recess means, if present, can also have different configurations, such as cylindrical or conical.

## Claims

1. Drive belt, in particular suitable for use in a continuously variable transmission, comprising at least one endless carrier (7a or 7b), and transverse elements (8) positioned on said carrier, the transverse elements being provided with at least one recess to accommodate said carrier, while said recess comprises a bearing surface (15) and a top surface (17),
- in a tilted position of one transverse element in a plane at right angles to said carrier at least two contact points of the transverse element are determined:
- a first contact point (11) determined by said bearing surface with said carrier, and
- a second point determined by said top surface (17) with said carrier,
- in a straight position of said one transverse element in the axial direction of the drive belt said first contact point (11) and said second contact point (16) lying at a distance A from each other, and also
- in a straight position of said one transverse element in the radial direction of the drive belt said carrier and said second point lying at a distance B from each other,
characterized in that
- the arc tangent of the quotient B/A of the distance B over distance A is smaller than 1° and greater than 0°.

2. Drive belt according to Claim 1, wherein the drive belt comprises two carriers.

3. Drive belt according to one of the preceding claims, wherein the arc tangent of the quotient B/A is smaller than 0.8° and greater than 0.2°.

4. Drive belt according to one of the preceding claims, wherein the arc tangent of the quotient B/A is approximately 0.5°.

5. Drive belt according to one of the preceding claims, wherein said bearing surface (15) is profiled.

6. Drive belt according to one of the preceding claims, wherein said top surface (17) is profiled.

7. Drive belt according to one of the preceding claims, in which said transverse elements (8) are provided with projection/recess means, wherein a projection (12) of one transverse element is accommodated with some play in a recess (12') of the adjacent transverse element.

8. Drive belt according to Claim 7, wherein the play is essentially in the axial direction of the drive belt between said projection and said recess.

## Patentansprüche

1. Treibriemen, insbesondere zur Verwendung in einem kontinuierlich veränderbaren Getriebe geeignet, der einschließt mindestens einen endlosen Träger (7a oder 7b) und Querelemente (8), die auf dem genannten Träger angeordnet sind, wobei die Querelemente mit mindestens einer Vertiefung versehen sind, um den genannten Träger aufzunehmen, während die genannte Vertiefung eine Tragoberfläche (15) und eine obere Oberfläche (17) umfaßt,
- in einer geneigten Position eines Querelements in einer Ebene unter rechten Winkeln zu dem genannten Träger sind mindestens zwei Berührungspunkte des Querelements bestimmt:
- ein erster Berührungspunkt (11), der durch die genannte Tragoberfläche mit dem genannten Träger bestimmt ist, und
- ein zweiter Berührungspunkt, der durch die genannte obere Oberfläche (17) mit dem genannten Träger bestimmt ist,
- in einer geraden Position des genannten einen Querelements in der axialen Richtung des Treibriemens liegen der genannte erste Berührungspunkt (11) und der genannte zweite Berührungspunkt (16) in einem Abstand A voneinander, und ebenfalls
- liegen in einer geraden Position des genannten einen Querelements in der radialen Richtung des Treibriemens der genannte Träger und der genannte zweite Punkt in einem Abstand B voneinander,
**dadurch gekennzeichnet,** daß
- der arctg des Quotienten B/A des Abstandes B über dem Abstand A kleiner als 1° und größer als 0° ist.

2. Treibriemen gemäß Anspruch 1, worin der Treibriemen zwei Träger umfaßt.

3. Treibriemen gemäß einem der vorhergehenden Ansprüche, worin der arctg des Quotienten B/A kleiner als 0,8° und größer als 0,2° ist.

4. Treibriemen gemäß einem der vorhergehenden Ansprüche, worin der arctg des Quotienten B/A ungefähr 0,5° ist.

5. Treibriemen gemäß einem der vorhergehenden Ansprüche, worin die genannte Tragoberfläche (15) ein Profil aufweist.

6. Treibriemen gemäß einem der vorhergehenden Ansprüche, worin die genannte obere Oberfläche (17) ein Profil aufweist.

7. Treibriemen gemäß einem der vorhergehenden Ansprüche, worin die genannten Querelemente (8) mit einer Vorsprungs/Vertiefungseinrichtung versehen sind, worin ein Vorsprung (12) eines Querelementes mit einigem Spiel in einer Vertiefung (12') des benachbarten Querelementes aufgenommen ist.

8. Treibriemen gemäß Anspruch 7, worin das Spiel im wesentlichen in der axialen Richtung des Treibriemens zwischen dem genannten Vorsprung und der genannten Vertiefung ist.

## Revendications

1. Courroie de transmission, convenant notamment pour être utilisée dans une transmission continûment variable, comprenant au moins un support sans fin (7a ou 7b) et des éléments transversaux (8) disposés sur ledit support, les éléments transversaux étant pourvus d'au moins un renfoncement servant à loger ledit support, tandis que ledit renfoncement comporte une surface d'appui (15) et une surface supérieure (17),
- lorsqu'un élément transversal est dans une position basculée dans un plan perpendiculaire audit support, au moins deux points de contact de l'élément transversal sont déterminés :
- un premier point de contact (11) déterminé par ladite surface d'appui avec ledit support, et
- un second point déterminé par ladite surface supérieure (17) avec ledit support,
- lorsque ledit élément transversal est dans une position droite dans la direction axiale de la courroie de transmission, ledit premier point de contact (11) et ledit second point de contact (16) sont situés à une distance A l'un de l'autre, et également
- lorsque ledit élément transversal est dans une position droite dans la direction radiale de ladite courroie de transmission, ledit support et ledit second point sont situés à une distance B l'un de l'autre,
caractérisée en ce que
- l'arc tangente du quotient B/A de la distance B à la distance A est inférieur à 1° et est supérieur à 0°.

2. Courroie de transmission selon la revendication 1, dans laquelle la courroie de transmission comprend deux supports.

3. Courroie de transmission, selon l'une des revendications précédentes, dans laquelle l'arc tangente du quotient B/A est inférieur à 0,8° et supérieur à 0,2°.

4. Courroie de transmission selon l'une des revendications précédentes, dans laquelle l'arc tangente du quotient B/A est égal approximativement à 0,5°.

5. Courroie de transmission selon l'une des revendications précédentes, dans laquelle ladite surface d'appui (15) est profilée.

6. Courroie de transmission selon l'une des revendications précédentes, dans laquelle ladite surface supérieure (17) est profilée.

7. Courroie de transmission selon l'une des revendications précédentes, dans laquelle lesdits éléments transversaux (8) sont équipés de moyens à partie saillante/ renfoncement, une partie saillante (12) d'un élément transversal étant logée avec un certain jeu dans un renfoncement (12') de l'élément transversal adjacent.

8. Courroie de transmission selon la revendication 7, dans lequel le jeu est présent essentiellement dans la direction axiale de la courroie de transmission entre ladite partie saillante et ledit renfoncement.
